# EUROPÄISCHE PATENTSCHRIFT

(11) **EP 1 037 189 B1**
(45) Veröffentlichungstag und Bekanntmachung des Hinweises auf die Patenterteilung: **09.08.2006**
(21) Anmeldenummer: 00104412.2
(22) Anmeldetag: 02.03.2000
(51) Int. Cl.: G08G 1/16

(54) **Verfahren zur Anzeige von Objekten für Fahrzeug**
Method to display objects for vehicle
Procédé d'affichage d'objets pour véhicule

(30) Priorität: 16.03.1999 DE 19911648
(43) Veröffentlichungstag der Anmeldung: 20.09.2000
(73) Patentinhaber: Volkswagen Aktiengesellschaft, 38436 Wolfsburg (DE)
(72) Erfinder: Bergholz, Ralf, Dr., 38108 Braunschweig (DE); Mai, Rudolf, 38442 Wolfsburg (DE); Höllermann, Jörg, 38442 Wolfsburg (DE); Weis, Tim, 38114 Braunschweig (DE)

(56) Entgegenhaltungen:
- EP-A- 0 591 743
- WO-A-96/38319
- FR-A- 2 646 383
- US-A- 5 414 439
- US-A- 5 793 308
- PATENT ABSTRACTS OF JAPAN vol. 1997, no. 06, 30. Juni 1997 (1997-06-30) & JP 09 048282 A (MAZDA MOTOR CORP), 18. Februar 1997 (1997-02-18)
- PATENT ABSTRACTS OF JAPAN vol. 015, no. 077 (M-1085), 22. Februar 1991 (1991-02-22) & JP 02 299944 A (CLARION CO LTD), 12. Dezember 1990 (1990-12-12)
- PATENT ABSTRACTS OF JAPAN vol. 1997, no. 12, 25. Dezember 1997 (1997-12-25) & JP 09 202180 A (NILES PARTS CO LTD), 5. August 1997 (1997-08-05)
- PATENT ABSTRACTS OF JAPAN vol. 1996, no. 03, 29. März 1996 (1996-03-29) & JP 07 290995 A (OLYMPUS OPTICAL CO LTD), 7. November 1995 (1995-11-07)

## Beschreibung

Die Erfindung betrifft ein Verfahren und eine Einrichtung zur Anzeige von Objekten, die sich vor oder hinter einem Fahrzeug befinden, insbesondere von Objekten, die sich von hinten nähern oder an die sich das Fahrzeug bei Rückwärtsfahrt annähert.

Im allgemeinen Fahrbetrieb blickt der Führer eines Fahrzeugs nach vorn. Der durch Rückspiegel kontrollierbare Bereich ist im allgemeinen eingeschränkt. Durch Wenden des Kopfes kann der Fahrzeugführer zwar einen größeren Bereich übersehen, jedoch bleibt ein mehr oder weniger großer Bereich durch Fahrzeugteile oder Ladung verdeckt. Zudem verliert er vorübergehend die Übersicht nach vorn. Im Raum hinter dem Fahrzeug befinden sich jedoch häufig Objekte, die von sich aus oder auch hinsichtlich geplanter Manöver wie Rückwärtsfahren, Bremsen oder Spurwechsel eine Gefährdung bedeuten können.

Es sind Verfahren bekannt, mit denen der Raum hinter einem Fahrzeug überwacht werden kann. So beschreibt die DE 19 70 793 die Registrierung und Speicherung von hinter dem Fahrzeug befindlichen Objekten zur Beweissicherung im Falle einer Gefährdung oder eines Unfalls. Die Patentanmeldung DE 43 45 147 schlägt vor, den rückwärtigen Bereich mit einer Videokamera aufzunehmen und das Bild auf einem Monitor wiederzugeben. Dadurch soll die Funktion des Rückspiegels unterstützt oder ersetzt werden.

Bei diesen Verfahren werden jedoch alle hinter dem Fahrzeug vorhandenen Objekte dargestellt und die relevanten Objekte, d.h. diejenigen, von denen eine Gefährdung ausgehen kann, müssen vom Fahrzeugführer selbst erkannt werden. Beispielsweise ist es auf mehrspurigen Fahrbahnen für ihn wichtig, zu wissen, welche Fahrzeuge auf der eigenen oder auf benachbarten Spuren sich so schnell annähern, daß eine Gefährdung bei einem Spurwechsel nicht ausgeschlossen werden kann. Nur solche Fahrzeuge sind relevant für die Entscheidungen des Fahrzeugführers. Diese Informationen können mit den bekannten Verfahren nicht erhalten werden.

In der JP 09048282 A ist ein System zur indirekten visuellen Bestätigung von Objekten, welche sich einem Fahrzeug von hinten nähern, offenbart. Dabei wird mittels einer Kamera ein Bild des rückwärtigen Fahrzeugraums aufgenommen. Eine Bildauswertung analysiert dann das Bild nach Objekten, welche einer Sicherheitsbestätigung bedürfen. Diese Objekte werden anschließend im Bild markiert, und das Gesamtbild wird auf einem Bildschirm dargestellt.

Aufgabe der Erfindung ist es, ein Verfahren und eine Einrichtung anzugeben, mit dem sich dem Fahrzeug während der Fahrt von hinten nähernde oder sich vor dem Fahrzeug befindende Objekte (relevante Objekte) erfaßt, erkannt und im Wahmehmungsbereich des Fahrzeugführers dargestellt werden können, wobei dem Fahrzeugführer reduzierte Informationshinweise übermittelt werden.

Diese Aufgabe wird durch ein Verfahren mit den Merkmalen nach Anspruch 1 bzw. durch eine Einrichtung mit den Merkmalen nach Anspruch 11 gelöst.

Als relevant werden solche Objekte erkannt, die sich dem Fahrzeug während der Fahrt von hinten nähern bzw. sich vor dem Fahrzeug befinden, sei es auf der eigenen oder auf einer benachbarten Spur. Als Parameter für die Erkennung können Entfernung, die Position, absolute oder relative Geschwindigkeit (Annäherungsgeschwindigkeit) dienen. Dabei kann für die Beurteilung der Relevanz eine Beziehung zwischen Entfernung und/oder Position und Annäherungsgeschwindigkeit hergestellt werden. Das bedeutet, daß nur solche Objekte als relevant erkannt werden, die sich dem Fahrzeug innerhalb einer gewissen Zeitspanne (Annäherungszeit) bedrohlich nähern könnten, das heißt, daß das Objekt oder Fremdfahrzeug eine höhere Geschwindigkeit aufweist als das eigene Fahrzeug. Durch die Markierung der relevanten Objekte im Display wird die Aufmerksamkeit des Fahrzeugführers auf diese Objekte konzentriert, und er kann leicht entscheiden, ob die von ihm geplanten Manöver gefahrlos möglich sind. Dabei wird zuvor eine Rangordnung der Objekte erzeugt und nur eine vorgegebene Anzahl der relevanten Objekte markiert. Dies kann beispielsweise nach der Entfernung, der Richtung, der Fahrspur, der Annäherungsgeschwindigkeit oder der Annäherungszeit geschehen. Dabei wird nur eine vorgegebene Anzahl der meist relevanten Objekte markiert. Dadurch kann die Aufmerksamkeit des Fahrzeugführers z.B. auf ein Fahrzeug gelenkt werden, das die Spur wechselt und beschleunigt, und zugleich die Markierung von einem weniger relevanten Objekt weggelassen werden. Es wird vermieden, daß der Fahrzeugführer durch eine zu große Zahl markierter Objekte verwirrt wird.

Die von der Bilderfassungseinrichtung ausgehenden Signale können mit an sich bekannten Bildaufbereitungs- oder auswertesystemen verarbeitet werden. Beispielsweise kann das Bildsignal gespalten und ein Teil unmittelbar auf dem Display angezeigt werden, während ein anderer Teil ausgewertet wird, um relevante Objekte zu identifizieren. Die Geschwindigkeit der Annäherung kann beispielsweise durch Größenvergleich ein und desselben Objektes in zeitlich aufeinander folgenden Bildsequenzen ermittelt werden. Die Entfernung kann beispielsweise durch Vergleich der Größe des abgebildeten Objektes mit für das identifizierte Objekt typischen und in einem Speicher vorhandenen Abmessungen bestimmt werden. Relevante Objekte können dann beispielsweise mittels vorgegebener Grenzwerte, beispielsweise für Entfernung, Annäherungsgeschwindigkeit oder Annäherungszeit, die von den Fahrbedingungen, wie Fahrtrichtung oder Geschwindigkeit, abhängen können, erfaßt werden. Die relevanten Objekte können dann markiert oder vergrößert dargestellt und das so erhaltene Bild mit dem Bild des ersten Teilsignals überlagert werden.

Bei einer bevorzugten Ausführungsform der Erfindung wird die Messung der Entfernung durch den Einsatz von Abstandssensoren unterstützt.

Die Markierung der relevanten Objekte im Display kann beispielsweise durch farbige Hinterlegung, Einkreisung, Überlagerung mit einem Symbol, vergrößerte oder blinkende Darstellung erfolgen.

Als Bilderfassungseinrichtung wird in dem erfindungsgemäßen Verfahren bevorzugt eine elektronische Kamera, beispielsweise eine CCD-Kamera verwendet. Wenn bauartbedingt eine Bilderfassungseinrichtung nicht ausreicht, um den gesamten rückwärtigen Raum zu erfassen, können auch mehrere solche Einrichtungen angewendet werden, wobei die von diesen erzeugten Bilder nebeneinander angezeigt werden.

Als Display kann jede geeignete Anzeigevorrichtung verwendet werden, beispielsweise Bildröhrenmonitore, LCD (Liquid Crystal Displays = Flüssigkristallanzeigevorrichtungen) oder Head up-Displays, LCD (Liquid Crystal Displays = Flüssigkristallanzeigevorrichtungen) oder Head up-Displays. Bevorzugt werden LCD oder Head up-Displays eingesetzt. Letztere haben den Vorteil, daß der Fahrzeugführer die Blickrichtung nicht von der Außenwelt abzuwenden braucht und seine Aufmerksamkeit nach vorn nicht abgelenkt wird.

Bevorzugt werden im Display bei den markierten Objekten zusätzliche Informationen angezeigt. Dies können Zahlenangaben der Entfernung, der Annäherungsgeschwindigkeit und/oder der Annäherungszeit sein. Diese Angaben können auch durch andere, beispielsweise farbige, Zeichen angezeigt werden.

Weiter bevorzugt wird die Markierung der Objekte von akustischen Signalen begleitet. Dadurch wird die Erkennung durch den Fahrzeugführer unterstützt. Dies können beispielsweise Pieps- oder Gongsignale, aber auch Sprachsignale sein, die zusätzliche Informationen, z.B. über die Richtung, in der sich das markierte Objekt befindet, liefern.

Vorteilhaft kann die Bildinformation, ggf. einschließlich der Markierungen, gespeichert werden. Zur Begrenzung der erforderlichen Speicherkapazität kann die Speicherung auf einen bestimmten festgelegten oder wählbaren Zeitraum beschränkt und der Speicher laufend überschrieben werden.

Ebenfalls bevorzugt kann der Fahrzeugführer in das Verfahren interaktiv eingreifen. So kann er beispielsweise die Markierung unnötig markierter Objekte löschen, bestimmte Objekte als relevant bezeichnen und ihre Markierung veranlassen, die Speicherung steuern oder die Erkennung relevanter Objekte auf bestimmte Richtungen beschränken. Diese Eingriffe können beispielsweise durch Berühren bestimmter Stellen des Displays oder durch Sprachkommandos erfolgen. Der Eingriff kann auch mit der Betätigung bestimmter Bedienelemente, wie Lenkrad, Schalthebel oder Fahrtrichtungsanzeiger gekoppelt sein. Beispielsweise kann beim Anfahren die Erkennung relevanter Objekte auf die links angrenzende Fahrspur beschränkt werden.

Da für die Beurteilung der Relevanz nicht nur Abstand und die Annäherungsgeschwindigkeit des rückwärtigen Objekts, sondern auch die Fahrbedingungen des eigenen Fahrzeugs, Geschwindigkeit, Steigung und Krümmung der Fahrbahn, maßgeblich sein können, werden beim erfindungsgemäßen Verfahren bevorzugt auch Geschwindigkeitssensoren, Fahrstreckensensoren und GPS-Informationen, gegebenenfalls in Verbindung mit in einem Speicher vorliegender topographischer Information, eingesetzt.
Das erfindungsgemäße Verfahren läßt sich nicht nur vorteilhaft beim normalen Fahrbetrieb anwenden. Es macht auch bei langsamer Fahrt, z.B. beim Rückwärtsfahren, auf relevante Objekte aufmerksam. Beispielsweise kann die Aufmerksamkeit des Fahrzeugführers auf Kinder oder Tiere gelenkt werden, die sich von hinten auf das

Das erfindungsgemäße Verfahren läßt sich nicht nur vorteilhaft beim normalen Fahrbetrieb anwenden. Es macht auch bei langsamer Fahrt, z.B. beim Rückwärtsfahren, auf relevante Objekte aufmerksam. Beispielsweise kann die Aufmerksamkeit des Fahrzeugführers auf Kinder oder Tiere gelenkt werden, die sich von hinten auf das Fahrzeug zu bewegen und im Rückspiegel nicht zu sehen sind. Auch zum Erkennen und Ausmessen von Parklücken läßt sich das Verfahren, ggf. mit Hilfe interaktiver Eingriffe, anwenden.

Die Erfindung wird im folgenden anhand eines Ausführungsbeispiels weiter erläutert:

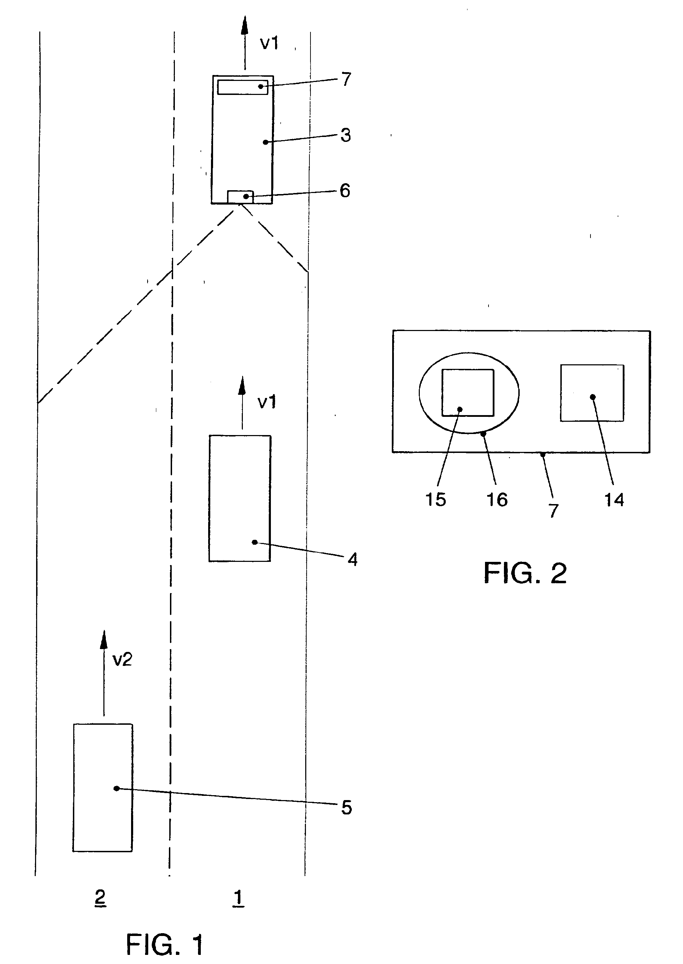

Figur 1 zeigt die beiden Fahrspuren 1 und 2 einer Fahrbahn mit Verkehr in der gleichen Richtung, beispielsweise bei einer Autobahn. Fahrzeug 3 bewegt sich mit der Geschwindigkeit v1 und ist mit Einrichtungen zur Ausführung des erfindungsgemäßen Verfahrens ausgerüstet, nämlich einer elektronischen Kamera 6, einem Head up-Display 7 und den hier nicht gezeigten Bildauswerteeinrichtungen. Zwei Fahrzeuge 4 und 5 befinden sich auf der Fahrbahn hinter dem Fahrzeug 3. Fahrzeug 4 fährt ebenfalls mit Geschwindigkeit v1 in ausreichendem Sicherheitsabstand zu Fahrzeug 3. Fahrzeug 5 fährt mit der Geschwindigkeit v2 > v1 auf der linken Fahrspur 2 der Fahrbahn. Beide Fahrzeuge werden von der elektronischen Kamera 6 erfaßt und über das Bildauswertesystem auf dem Display 7 dargestellt.

Figur 2 zeigt eine vergrößerte Darstellung des Displays 7. Beide Fahrzeuge werden auf dem Display dargestellt, und zwar ist 14 das Bild des Fahrzeugs 4 und 15 das Bild des Fahrzeugs 5. Da Fahrzeug 4 mit der gleichen Geschwindigkeit wie Fahrzeug 3 fährt, verändert sich der Abstand zwischen beiden nicht, so daß Fahrzeug 4 vom Bildauswertesystem nicht als relevant erkannt wird. Dagegen nähert sich Fahrzeug 5 rasch dem Fahrzeug 3, da v2 > v1 ist. Fahrzeug 5 ist also ein relevantes Objekt und wird im Display durch einen roten Ring 16 hervorgehoben. Auf diese Weise wird der Fahrzeugführer informiert, daß er nicht ohne Risiko auf die Fahrspur 2 wechseln kann.

### BEZUGSZEICHENLISTE

- 1, 2: Fahrspuren
- 3: Fahrzeug, das neue Verfahren anwendend
- 4, 5: andere Fahrzeuge
- 6: elektronische Kamera
- 7: Head up-Display
- 14: Bild des Fahrzeugs 4
- 15: Bild des Fahrzeugs 5
- 16: Markierung des Fahrzeugs 5
- v1: Geschwindigkeit der Fahrzeuge 3 und 4
- v2: Geschwindigkeit des Fahrzeugs 5

## Patentansprüche

1. Verfahren zur Anzeige von Objekten, die sich hinter einem Fahrzeug (3) befinden, wobei ein Bild des Raums vor oder hinter dem Fahrzeug (3) mit mindestens einer Bilderfassungseinrichtung aufgenommen und das Bild auf einem Display (7) im Sichtbereich des Fahrzeugführers wiedergegeben wird, **dadurch gekennzeichnet, dass** sich dem Fahrzeug (3) während der Fahrt von hinten nähernde oder sich vor dem Fahrzeug (3) befindende Objekte abhängig von der Fahrsituation erkannt und im Display (7) markiert und/oder durch Vergrößerung hervorgehoben werden, wobei eine Rangordnung der Objekte erzeugt und nur eine vorgegebene Anzahl der meist relevanten Objekte markiert werden.

2. Verfahren nach Anspruch 1, **dadurch gekennzeichnet, dass** Objekte in Abhängigkeit ihrer Geschwindigkeit und/oder der Relativgeschwindigkeit und/oder ihrer Entfernung und/oder ihrer momentanen Position zum Fahrzeug (3) als relevante Objekte erkannt werden.

3. Verfahren nach Anspruch 1 oder 2, **dadurch gekennzeichnet, dass** als Bilderfassungseinrichtung eine elektronische Kamera (6) verwendet wird.

4. Verfahren nach einem der Ansprüche 1 bis 3, **dadurch gekennzeichnet, dass** als Display (7) ein LCD oder Head up-Display verwendet wird.

5. Verfahren nach einem der vorangehenden Ansprüche, **dadurch gekennzeichnet, dass** für als relevant erkannte Objekte zusätzlich Entfernung, Annäherungszeit und/oder Annäherungsgeschwindigkeit zahlenmäßig oder durch Zeichen im Display (7) angegeben werden.

6. Verfahren nach einem der vorangehenden Ansprüche, **dadurch gekennzeichnet, dass** die Markierung der Objekte von akustischen Signalen begleitet wird.

7. Verfahren nach einem der vorangehenden Ansprüche, **dadurch gekennzeichnet, dass** die Bildinformation, ggf. einschließlich der Markierungen, gespeichert wird.

8. Verfahren nach Anspruch 7, **dadurch gekennzeichnet, dass** die Speicherung auf einen festgelegten oder wählbaren Zeitraum beschränkt ist.

9. Verfahren nach einem der vorangehenden Ansprüche, **dadurch gekennzeichnet, dass** es vom Fahrzeugführer interaktiv beeinflussbar ist.

10. Verfahren nach einem der vorangehenden Ansprüche, **dadurch gekennzeichnet, dass** die Erkennung relevanter Objekte durch Geschwindigkeitssensoren, Abstandssensoren und/oder GPS unterstützt wird.

11. Einrichtung zur Anzeige von Objekten, die sich hinter einem Fahrzeug (3) befinden, mit mindestens einer Bilderfassungseinrichtung, mit der ein Bild des Raums vor oder hinter dem Fahrzeug (3) aufnehmbar ist und mit einem Display (7) im Sichtfeld des Fahrzeugführers zur Wiedergabe des Bildes, **dadurch gekennzeichnet, dass** ein Bildauswertesystem vorgesehen ist, mit dem sich dem Fahrzeug (3) während der Fahrt von hinten nähernde oder sich vor dem Fahrzeug (3) befindende Objekte abhängig von der Fahrsituation erkennbar und im Display (7) markierbar und/oder durch Vergrößerung hervorhebbar sind, wobei eine Rangordnung der Objekte erzeugt wird und nur eine vorgegebene Anzahl der meist relevanten Objekte markiert werden.

## Claims

1. Method for displaying objects which are located behind a vehicle (3), an image of the space in front of and behind the vehicle (3) being recorded with at least one imaging device and the image being represented on a display (7) in the field of vision of the driver of the vehicle, **characterized in that** objects which approach the vehicle (3) from behind during travel or objects which are located in front of the vehicle (3) are detected as a function of the travel situation and marked on the display (7) and/or emphasized by enlargement, a ranking of the objects being generated and only a predefined number of the most relevant objects being marked.

2. Method according to Claim 1, **characterized in that** objects are detected as relevant objects as a function of their speed and/or the relative speed and/or their distance and/or their instantaneous position with respect to the vehicle (3).

3. Method according to Claim 1 or 2, **characterized in that** an electronic camera (6) is used as an imaging device.

4. Method according to one of Claims 1 to 3, **characterized in that** an LCD or head-up display is used as display (7).

5. Method according to one of the preceding claims, **characterized in that** the approach time and/or approach speed are additionally specified numerically or by characters on the display (7) for objects which are detected as relevant.

6. Method according to one of the preceding claims, **characterized in that** the marking of the objects is accompanied by acoustic signals.

7. Method according to one of the preceding claims, **characterized in that** the image information, if appropriate including the markings, is stored.

8. Method according to Claim 7, **characterized in that** the storage is restricted to a defined or selectable time period.

9. Method according to one of the preceding claims, **characterized in that** it can be influenced interactively by the driver of the vehicle.

10. Method according to one of the preceding claims, **characterized in that** the detection of relevant objects is supported by speed sensors, distance sensors, and/or GPS.

11. Device for displaying objects which are located behind a vehicle (3), with at least one imaging device with which an image of the space in front of or behind the vehicle (3) can be taken, and with a display (7) in the field of vision of the driver of the vehicle for reproducing the image, **characterized in that** an image evaluation system is provided with which objects which approach the vehicle (3) from behind during travel or are located in front of the vehicle (3) can be detected as a function of the travel situation and marked on the display (7) and/or can be emphasized by enlargement, a ranking of the objects being generated and only a predefined number of the most relevant objects being marked.

## Revendications

1. Procédé pour afficher des objets qui se trouvent derrière un véhicule (3), une image de l'espace devant ou derrière le véhicule (3) étant acquise avec au moins un dispositif d'acquisition d'image et l'image étant restituée sur un écran (7) dans le champ de vision du conducteur du véhicule, **caractérisé en ce que** les objets qui se rapprochent par l'arrière du véhicule (3) pendant le déplacement ou qui se trouvent devant le véhicule (3) sont identifiés en fonction de la situation de déplacement et sont marqués et/ou mis en évidence par grossissement sur l'écran (7), une hiérarchie des objets étant générée et seul un nombre prédéfini d'objets les plus pertinents étant marqué.

2. Procédé selon la revendication 1, **caractérisé en ce que** les objets sont identifiés comme étant des objets pertinents en fonction de leur vitesse et/ou de leur vitesse relative et/ou de leur distance et/ou de leur position momentanée par rapport au véhicule (3).

3. Procédé selon la revendication 1 ou 2, **caractérisé en ce que** le dispositif d'acquisition d'image employé est une caméra (6) électronique.

4. Procédé selon l'une des revendications 1 à 3, **caractérisé en ce que** l'écran (7) employé est un afficheur à cristaux liquides ou un afficheur « tête haute ».

5. Procédé selon l'une des revendications précédentes, **caractérisé en ce que** la distance, le temps d'approche et/ou la vitesse d'approche sont indiqués en plus pour les objets identifiés comme étant pertinents sous forme numérique et/ou par des symboles sur l'écran (7).

6. Procédé selon l'une des revendications précédentes, **caractérisé en ce que** le marquage des objets est accompagné de signaux sonores.

7. Procédé selon l'une des revendications précédentes, **caractérisé en ce que** l'information d'image est enregistrée, éventuellement en incluant les marquages.

8. Procédé selon la revendication 7, **caractérisé en ce que** l'enregistrement se limite à une période fixe ou sélectionnable.

9. Procédé selon l'une des revendications précédentes, **caractérisé en ce qu'**il peut être influencé de manière interactive par le conducteur du véhicule.

10. Procédé selon l'une des revendications précédentes, **caractérisé en ce que** la détection des objets pertinents est assistée par des capteurs de vitesse, des capteurs de distance et/ou un GPS.

11. Dispositif pour afficher des objets qui se trouvent derrière un véhicule (3), comprenant au moins un dispositif d'acquisition d'image avec lequel une image de l'espace devant ou derrière le véhicule (3) peut être enregistrée et comprenant un écran (7) dans le champ de vision du conducteur du véhicule destiné à restituer l'image, **caractérisé en ce qu'**il est prévu un système d'interprétation des images avec lequel les objets qui se rapprochent par l'arrière du véhicule (3) pendant le déplacement ou qui se trouvent devant le véhicule (3) peuvent être identifiés en fonction de la situation de déplacement et peuvent être marqués et/ou mis en évidence par grossissement sur l'écran (7), une hiérarchie des objets étant générée et seul un nombre prédéfini d'objets les plus pertinents étant marqué.
